# EUROPEAN PATENT APPLICATION

(11) **EP 4 235 441 A1**
(43) Date of publication of application: **30.08.2023**
(21) Application number: 23151691.5
(22) Date of filing: 16.01.2023
(51) Int. Cl.: G06F 12/0831, G06F 12/0888, G06F 13/40, G06F 13/42, G06F 3/06, G06F 12/0813, G06F 12/02

(54) **SYSTEM, METHOD AND APPARATUS FOR PEER-TO-PEER COMMUNICATION**

(30) Priority: 28.02.2022 US 202217682015
(71) Applicant: INTEL Corporation, Santa Clara, CA 95054 (US)
(72) Inventor: PAL, Rahul, 560037 Bangalore (IN); BALLE, Susanne M., Hudson, 03051 (US); PUFFER, David, Tempe, 85283 (US); CHITLUR, Nagabhushan, Portland, 97229 (US)
(74) Representative: Goddar, Heinz J.

(57) **Abstract**

In an embodiment, an apparatus includes: a first downstream port to couple to a first peer device; a second downstream port to couple to a second peer device; and a peer-to-peer (PTP) circuit to receive a memory access request from the first peer device, the memory access request having a target associated with the second peer device, where the PTP circuit is to convert the memory access request from a coherent protocol to a memory protocol and send the converted memory access request to the second peer device. Other embodiments are described and claimed.

## Description

### BACKGROUND

Different processor types including central processing units (CPUs), graphics processing units (GPUs), field programmable gate arrays (FPGAs), and other accelerators are deployed in datacenters and may generically be referred to as "XPUs." For certain datacenter segments like artificial intelligence (AI) training and high performance computing (HPC), multi-XPU systems may be provided, where each CPU may host multiple XPU devices. These devices may be multiple instances of the same XPU, or even different XPUs each specialized in tackling different functions, for e.g., smart network interface circuits (NICs) and GPUs. In addition, this overall system under the CPU may have additional memory devices that provide additional capacity to the system to enable large AI models or huge data sets. These devices may be connected behind a single root hierarchy of the CPU, allowing them to communicate more effectively with each other.

Compute Express Link (CXL) is a recent communication protocol for use between a device and host CPU connected over Peripheral Component Interconnect Express (PCIe) links. CXL brings benefit of shared coherent cacheable memory between device and host. The current CXL specification (e.g., CXL Specification version 2.0 (published November 2020)) allows a single CXL accelerator under a CPU root port, with other devices being either CXL-based memory or PCIE device, preventing use of this protocol for multiple CXL-based accelerators behind a CXL switch.

### BRIEF DESCRIPTION OF THE DRAWINGS

FIG. 1 is a block diagram of a system in accordance with an embodiment.
FIG. 2 is a block diagram of a switch in accordance with an embodiment.
FIG. 3 is a flow diagram of a method in accordance with an embodiment.
FIG. 4 is a block diagram of a system in accordance with an embodiment.
FIG. 5 is a block diagram of a system in accordance with another embodiment of the present invention.
FIG. 6 is a block diagram of an embodiment of a SoC design in accordance with an embodiment.
FIG. 7 is a block diagram of a system in accordance with another embodiment of the present invention.
FIG. 8 is a block diagram of a network architecture in accordance with an embodiment.

### DETAILED DESCRIPTION

In various embodiments, multiple peer devices may be coupled downstream of a switch. The switch device may enable certain peer communications between these devices with reduced latency. This is so, since such communications may proceed from initiator peer device directly through the switch device to the target peer device, without passing through a host or other upstream device. In this way, certain types of peer-to-peer (PTP) communication can be supported by CXL switches beyond PCIe style direct memory access (DMA)-based copies or migration of memory between these devices. For example, an accelerator (e.g., a CXL accelerator) may issue native load/store accesses to a peer memory (e.g., in another Type 2, or Type 3-plus CXL device) using similar semantics to how it is allowed to access system memory resident on the CXL host.

With embodiments, a hybrid technique is realized, where bulk PTP accesses may be achieved via a switch for typical accesses from device to system memory resident on a peer device, while certain low bandwidth peer-to-peer accesses may instead be sent via a host. In one or more embodiments, a requesting device has no notion of where the memory it is trying to access is located in the system topology.

In certain use cases, most of the peer memory accesses from a device require only non-caching semantics. Such peer accesses may be of the nature of pushing data to all peers for collective operations such as reduction on learned deltas to model weights during data parallel AI training, or sending input data to the next device in a dataflow pipeline using different devices. While such operations benefit from shared memory addressing between devices so that applications can directly push or pull data without asking the kernel to coordinate data movement, they do not have reuse characteristics that necessitate caching. However, caching semantics may help certain operations such as atomic operations that devices may use for synchronization, etc. Being able to cache memory near the requesting device in these cases allows any device-supported atomic to be executed on even peer device memory.

Such memory access requests may be directed to CXL mapped system memory, and may be sent according to a CXL.cache protocol. On receipt of such requests, a switch may decode a target address on upstream CXL.cache requests arriving from its downstream ports and check whether the addresses lie in any of the ranges mapped to a peer downstream port memory, e.g., based on information in address range registers or other system address decoder mechanisms. Assuming a request is directed to a downstream device, based at least in part on a cacheability attribute of the request, the switch may selectively route the CXL.cache request to either its upstream port (i.e. towards host) or to a peer downstream port.

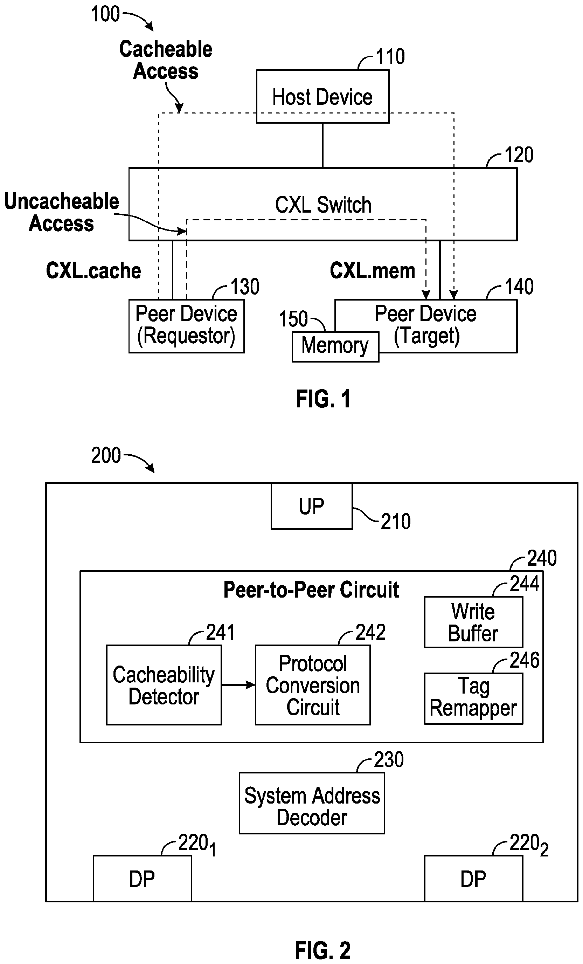

Referring now to FIG. 1, shown is a block diagram of a system in accordance with an embodiment. As shown in FIG. 1, system 100 may be any type of computing device, which can range from larger systems such as a server or other datacenter implementation to an edge device, a client device or so forth. In the high level shown in FIG. 1, only a few components of the system are illustrated. Specifically, a host processor 110 is present. In various embodiments, host processor 110 may be a multicore processor or other system on chip (SoC). Host processor 110 couples to a switch 120. In the embodiments herein, switch 120 may be implemented as a CXL switch, although other implementations are possible.

Still with reference to FIG. 1, multiple peer devices are coupled to switch 120. As shown, a first peer device 130 and a second peer device 140 couple to switch 120. Device 130 may be a CXL Type 2 device, and in the illustration of FIG. 1, device 130 acts as a requestor to issue a memory access request that targets a memory 150 associated with peer device 140. Thus peer device 140 and its associated memory 150 in this illustration are the target of this memory access request. In one or more embodiments, peer device 140 may be a CXL Type 2 or Type 3 (or Type 3+) device. While shown with these limited components for purposes of illustration, understand that a given system may include additional peer and host devices, along with additional switching circuitry, memory, storage, networking circuitry and so forth.

In the illustration of FIG. 1, peer device 130 issues the memory access request as a CXL.cache request, which is received in switch 120 and is targeted to memory 150. Switch 120 may process this incoming memory access request to determine its destination and further to determine whether it is to be sent directly to peer device 140 or instead is to be directed to peer device 140 via host processor 110.

In embodiments herein, this determination may be based, at least in part, on whether the memory access request is a cacheable or uncacheable request. If it is determined that the request is uncacheable, switch 120 may send the memory request directly to peer device 140. Instead if it is determined that the request is a cacheable request, the request is sent to host device 110 for handling (and thereafter through switch 120 to peer device 140).

Note further that in the instance where this incoming request (which is received as a CXL.cache request) is uncacheable, switch 120 converts the request to a CXL.mem request prior to sending it on to peer device 140. While not shown in the high level of FIG. 1, after the request is fulfilled by peer device 140, a response may be sent back through switch 120 to peer device 130. Understand while shown at this high level in the embodiment of FIG. 1, many variations and alternatives are possible.

Referring now to FIG. 2, shown is a block diagram of a switch in accordance with an embodiment. As illustrated in FIG. 2, switch 200 is a representation of a CXL switch such as switch 120 in the FIG. 1 embodiment. However, understand that embodiments are not limited in this regard and switch 200 may be any other type of switch device that couples components together.

As illustrated, switch 200 includes an upstream port 210 via which it couples to a host, and multiple downstream ports 220₁₋₂ via which it couples to downstream devices such as the peer devices described in FIG. 1. Understand while shown with these limited number of ports, additional ports in both upstream and downstream directions may be present in other implementations. For example, a switch may include multiple virtual CXL switches (VCSs). In such implementations, each VCS may include at least one upstream port and one or more downstream ports, and may be coupled to virtual PCI-to-PCI bridges (VPPBs) in upstream and downstream directions.

As further shown, switch 200 includes a system address decoder 230. System address decoder 230 may include an address map including address range registers or so forth, and may be configured, based on an address of an incoming request, to determine a destination of the request. In embodiments herein, system address decoder 230 may be configured to determine whether incoming requests received from downstream devices are directed to a peer (downstream) device or an upstream device.

As further illustrated, switch 200 also includes a peer-to-peer (PTP) circuit 240. PTP circuit 240 may be configured to handle incoming PTP requests and direct the requests appropriately. With embodiments, PTP circuit 240 may determine, when a request is directed to a peer target device, whether to directly send the request to the peer device or route the request upstream for host processing. This determination may be based at least in part on cacheability of the request. In other cases, this determination may also take into account security considerations, such as having the switch programmed to either always send PTP requests via a host (for particular or all downstream requestors) or have configured address ranges that are compulsorily passed via the host.

Still with reference to FIG. 2, PTP circuit 240 may include a cacheability detector 241 to identify cacheability of the request. As also shown in FIG. 2, PTP circuit 240 includes a protocol conversion circuit 242. In embodiments, protocol conversion circuit 242 may be configured to convert incoming PTP requests from a first interconnect protocol to a second interconnect protocol. More specifically, in one or more embodiments, protocol conversion circuit 242 may be configured to convert an incoming CXL.cache request to a CXL.mem request.

As further illustrated, PTP circuit 240 also includes a write buffer 244. Write buffer 244 may be used to store incoming write data received from a requester peer device and store it prior to the data being sent to the target peer device. PTP circuit 240 further may include a tag remapper 246. In one or more embodiments, tag remapper 246 may remap an incoming tag associated with a PTP request from an original tag to a remapped tag. This remapped tag may be sent to the target peer device to identify a source of the request. Accordingly, a response generated in the target peer device may be sent back to switch 200 with this remapped tag to enable switch 200 to forward the response to the requestor (via another tag remapping back to the original source tag by tag remapper 246). Although shown at this high level in the embodiment of FIG. 2, many variations and alternatives are possible.

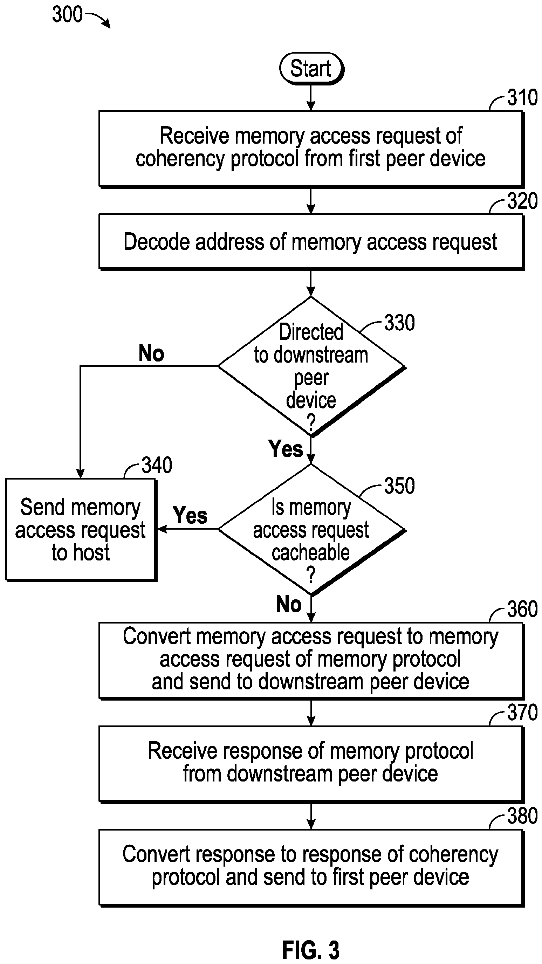

Referring now to FIG. 3, shown is a flow diagram of a method in accordance with an embodiment. More specifically, FIG. 3 illustrates a method 300 that may be performed by hardware circuitry of a switch for processing PTP requests in accordance with an embodiment. As such, method 300 may be performed by hardware circuitry present within a switch, alone and/or in combination with firmware and/or software.

As illustrated, method 300 begins by receiving a memory access request from a first peer device (block 310). This memory access request is a PTP request and may be of a first interconnect protocol. With reference back to FIG. 1, this request may be of a coherent protocol such as a CXL.cache request. In a CXL implementation, the CXL.cache protocol defines interactions between a device and host as a number of requests that each have at least one associated response message and sometimes a data transfer. The interface may implement three channels in each direction: request, response, and data. In other implementations, the coherent protocol may be an intra-device interconnect (IDI) protocol, an Intel^{®} UltraPath Interconnect (UPI) protocol, a cache coherent interconnect for accelerators (CCIX) protocol, AMD coherent HyperTransport^{™} protocol, and so forth.

Still with reference to FIG. 3, control next passes to block 320 where the target of the request may be determined. More specifically, the switch may decode a destination address of the memory access request to identify the target of this request. Control next passes to diamond 330 where it is determined whether this request is directed to a downstream device. This determination may be made in the system address decoder. If the request is not directed to a downstream peer device, control passes to block 340, where the request is sent to the host processor.

Still with reference to FIG. 3, instead if it is determined that the request is directed to a downstream peer device, control passes next to diamond 350 to determine whether the request is a cacheable request. Although embodiments are not limited in this regard, in one implementation this determination may be based on a request type, where certain memory access requests may be identified as cacheable and other memory access requests identified as uncacheable. In some cases, a memory access request may include a opcode or other cacheability field or indicator to identify whether the request is cacheable. In an example, certain CXL memory access requests including certain read requests including RdShared or RdAny or RdOwn (done in advance of a cacheable write) may be considered cacheable, while other CXL memory access requests including a current read (RdCurr) and a weakly ordered write invalidate (WOWrlnv) may be considered uncacheable.

Still referring to FIG. 3, if the request is determined to be cacheable, control passes to block 340 as discussed above, where the request is sent to the host device. Otherwise if the request is uncacheable, control passes to block 360 where the memory access request may be converted to a memory access request of a second interconnect protocol, namely, a memory protocol. In an embodiment, this memory protocol may be a CXL.mem protocol. In a CXL implementation, the CXL.mem protocol is a transactional interface that may be used for multiple different memory attach options including when a memory controller is located in the host or an accelerator, or a memory buffer. In other implementations, the memory protocol may be a scalable memory interconnect (SMI) protocol, SMI 3rd generation (SMI3), memory protocol, memory semantic protocol, Gen-Z^{™} protocol, and so forth.

After this conversion, the request is sent to a downstream peer device. Next at block 370 a response for this request may be received from the downstream peer device. This response may be of the memory protocol, here a CXL.mem response. In turn, at block 380 the switch may convert this response to a response of the coherent protocol and send it to the requestor peer device. Understand while shown at this high level in the embodiment of FIG. 3, many variations and alternatives are possible.

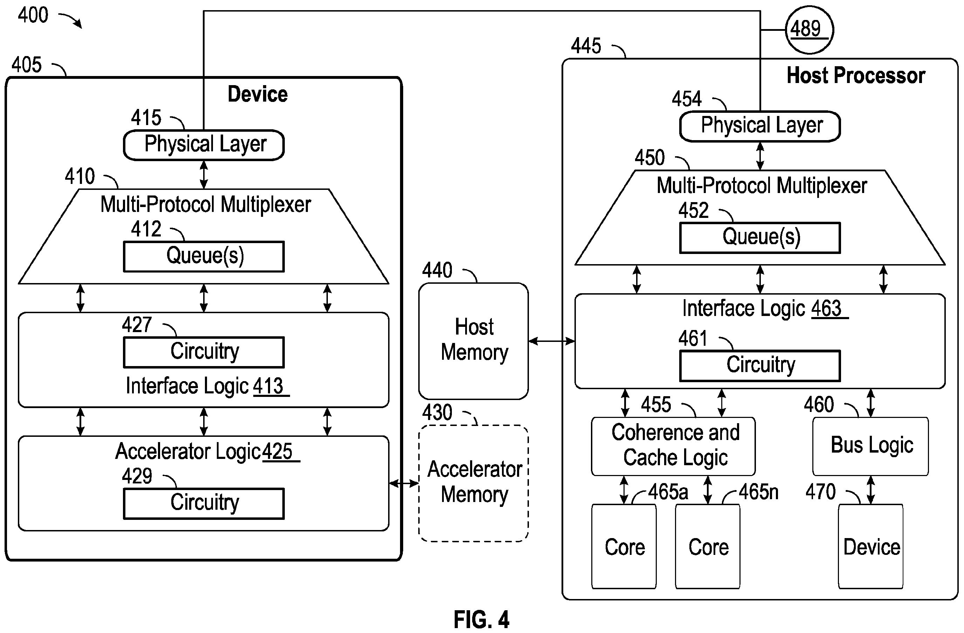

FIG. 4 is a block diagram of a system in accordance with an embodiment. As shown in FIG. 4 a device 405 may be an accelerator or processor device coupled to a host processor 445 via an interconnect 489, which may be single interconnect, bus, trace, and so forth. Device 405 is representative of a multiple peer devices that may couple to host processor 445 via a CXL switch (not shown for ease of illustration in FIG. 4). Such peer devices 405 and host processor 445 may communicate over link 489 to enable data and messages to pass therebetween. In some embodiments, link 489 may be operable to support multiple protocols and communication of data and messages via the multiple interconnect protocols, including a CXL protocol as described herein. For example, link 489 may support various interconnect protocols, including a non-coherent interconnect protocol, a coherent interconnect protocol, and a memory interconnect protocol. Non-limiting examples of supported interconnect protocols may include PCI, PCIe, USB, IDI, IOSF, SMI, SMI3, SATA, CXL.io, CXL.cache, and CXL.mem, and/or the like.

In embodiments, device 405 may include accelerator logic 425 including circuitry 429. In some instances, accelerator logic 425 and circuitry 429 may provide processing and memory capabilities. Examples of device 405 may include producer-consumer devices such as a graphics or other specialized accelerator, producer-consumer plus devices, software-assisted device memory devices, autonomous device memory devices, and giant cache devices. In some cases, accelerator logic 425 may couple to an optional accelerator memory 430. Accelerator logic 425 and circuitry 429 may provide the processing and memory capabilities based on the device. For example, accelerator logic 425 and circuitry 429 may communicate using, for example, a coherent interconnect protocol for various functions, such as coherent requests and memory flows with host processor 445 via interface logic 413 and circuitry 427.

Interface logic 413 and circuitry 427 may determine an interconnect protocol based on the messages and data for communication. In some embodiments, interface logic 413 may be coupled to a multi-protocol multiplexer 410 having one or more protocol queues 412 to send and receive messages and data with host processor 445. Protocol queue 412 may be protocol specific such that each interconnect protocol may be associated with a particular protocol queue. Multiplexer 410 may also implement arbitration circuitry to arbitrate between communications of different protocols and provide selected communications to a physical layer 415. Device 405 may issue peer memory access requests per the CXL.cache protocol, and may receive peer memory access requests per the CXL.memory protocol, as described herein.

In various embodiments, host processor 445 may be a main processor such as a CPU. Host processor 445 may be coupled to a host memory 440 and may include coherence logic (or coherence and cache logic) 455, which may include a cache hierarchy. Coherence logic 455 may communicate using various interconnects with interface logic 463 including circuitry 461 and one or more cores 465a-n. In some embodiments, coherence logic 455 may enable communication via one or more of a coherent interconnect protocol and a memory interconnect protocol.

In various embodiments, host processor 440 may include a device 470 to communicate with a bus logic 460 over an interconnect. In some embodiments, device 470 may be an I/O device, such as a PCIe I/O device. In other cases, one or more external devices such as PCIe devices may couple to bus logic 470.

In embodiments, host processor 445 may include interface logic 463 and circuitry 461 to enable multi-protocol communication between the components of host processor 445 and device 405. Interface logic 463 and circuitry 461 may process and enable communication of messages and data between host processor 445 and device 405 in accordance with one or more interconnect protocols, e.g., a non-coherent interconnect protocol, a coherent interconnect, protocol, and a memory interconnect protocol, dynamically. For example, interface logic 463 and circuitry 461 may determine a message type for each message and determine which interconnect protocol of a plurality of interconnect protocols to process each of the messages. Different interconnect protocols may be utilized to process the messages.

In some embodiments, interface logic 463 may be coupled to a multi-protocol multiplexer 450 having one or more protocol queues 452 to send and receive messages and data with device 405. Protocol queue 452 may be protocol specific such that each interconnect protocol may be associated with a particular protocol queue. Multiplexer 450 may also implement arbitration circuitry to arbitrate between communications of different protocols and provide selected communications to a physical layer 454.

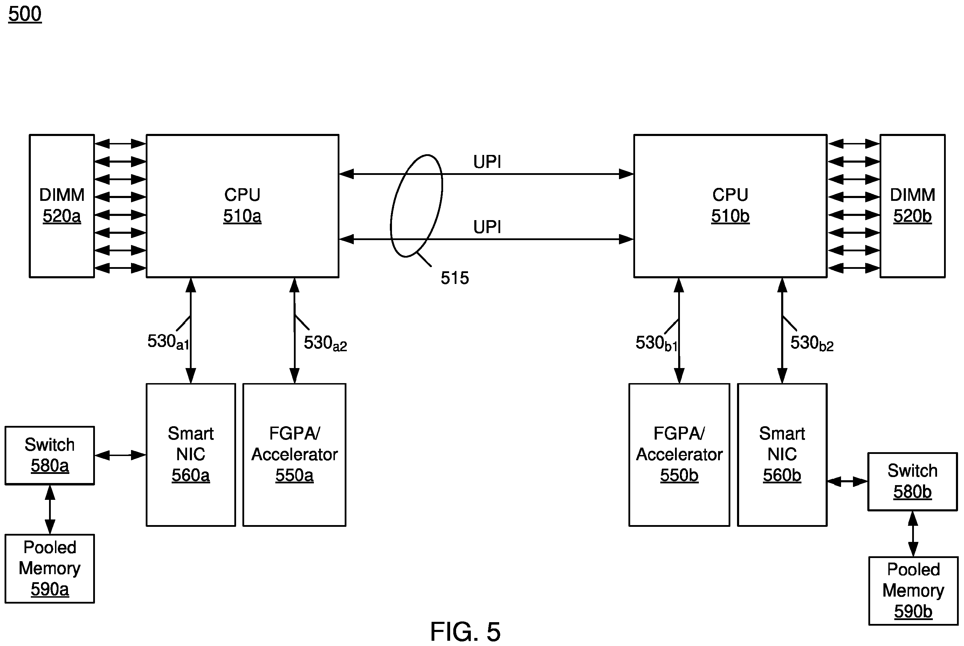

Referring now to FIG. 5, shown is a block diagram of a system in accordance with another embodiment of the present invention. As shown in FIG. 5, a system 500 may be any type of computing device, and in one embodiment may be a server system such as an edge platform. In the embodiment of FIG. 5, system 500 includes multiple CPUs 510a,b that in turn couple to respective system memories 520a,b which in embodiments may be implemented as dual inline memory modules (DIMMs) such as double data rate (DDR) memory, persistent or other types of memory. Note that CPUs 510 may couple together via an interconnect system 515 such as an Intel^{®} Ultra Path Interconnect or other processor interconnect technology.

To enable coherent accelerator devices and/or smart adapter devices to couple to CPUs 510 by way of potentially multiple communication protocols, a plurality of interconnects 530a1-b2 may be present. In an embodiment, each interconnect 530 may be a given instance of a CXL.

In the embodiment shown, respective CPUs 510 couple to corresponding field programmable gate arrays (FPGAs)/accelerator devices 550a,b (which may include graphics processing units (GPUs), in one embodiment. In addition CPUs 510 also couple to smart NIC devices 560a,b. In turn, smart NIC devices 560a,b couple to switches 580a,b (e.g., CXL switches in accordance with an embodiment) that in turn couple to a pooled memory 590a,b such as a persistent memory. In embodiments, switches 580 may handle incoming PTP memory access requests by performing, if appropriate protocol conversion and directing the requests directly to a destination device (avoiding host processor latency), as described herein. Of course, embodiments are not limited to switches and the techniques described herein may be performed by other entities of a system.

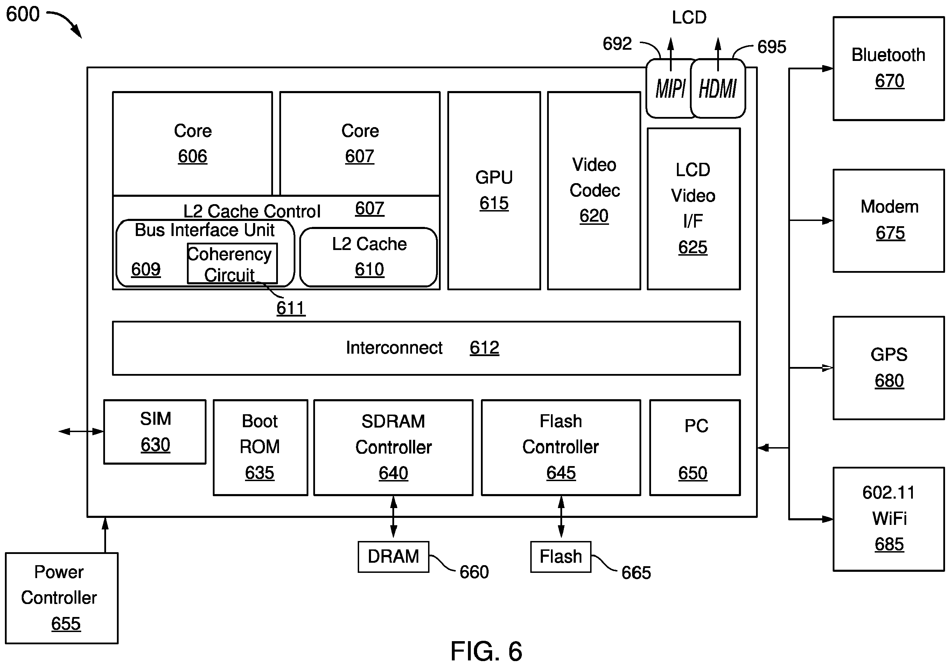

Turning next to FIG. 6, an embodiment of a SoC design in accordance with an embodiment is depicted. As a specific illustrative example, SoC 600 may be configured for insertion in any type of computing device, ranging from portable device to server system. Here, SoC 600 includes 2 cores 606 and 607. Cores 606 and 607 may conform to an Instruction Set Architecture, such as an Intel^{®} Architecture Core^{™}-based processor, an Advanced Micro Devices, Inc. (AMD) processor, a MIPS-based processor, an ARM-based processor design, or a customer thereof, as well as their licensees or adopters. Cores 606 and 607 are coupled to cache controller 608 that is associated with bus interface unit 609 and L2 cache 610 to communicate with other parts of system 600 via an interconnect 612. As seen, bus interface unit 609 includes a coherency circuit 611, which may perform coherency operations such as handling of peer cacheable memory access requests as described herein.

Interconnect 612 provides communication channels to the other components, such as a Subscriber Identity Module (SIM) 630 to interface with a SIM card, a boot ROM 635 to hold boot code for execution by cores 606 and 607 to initialize and boot SoC 600, a SDRAM controller 640 to interface with external memory (e.g., DRAM 660), a flash controller 645 to interface with non-volatile memory (e.g., flash 665), a peripheral controller 650 (e.g., an eSPI interface) to interface with peripherals, video codec 620 and video interface 625 to display and receive input (e.g., touch enabled input), GPU 615 to perform graphics related computations, etc. In addition, the system illustrates peripherals for communication, such as a Bluetooth module 670, 3G modem 675, GPS 680, and WiFi 685. Also included in the system is a power controller 655. Further illustrated in FIG. 6, system 600 may additionally include interfaces including a MIPI interface 692, e.g., to a display and/or an HDMI interface 695 also which may couple to the same or a different display.

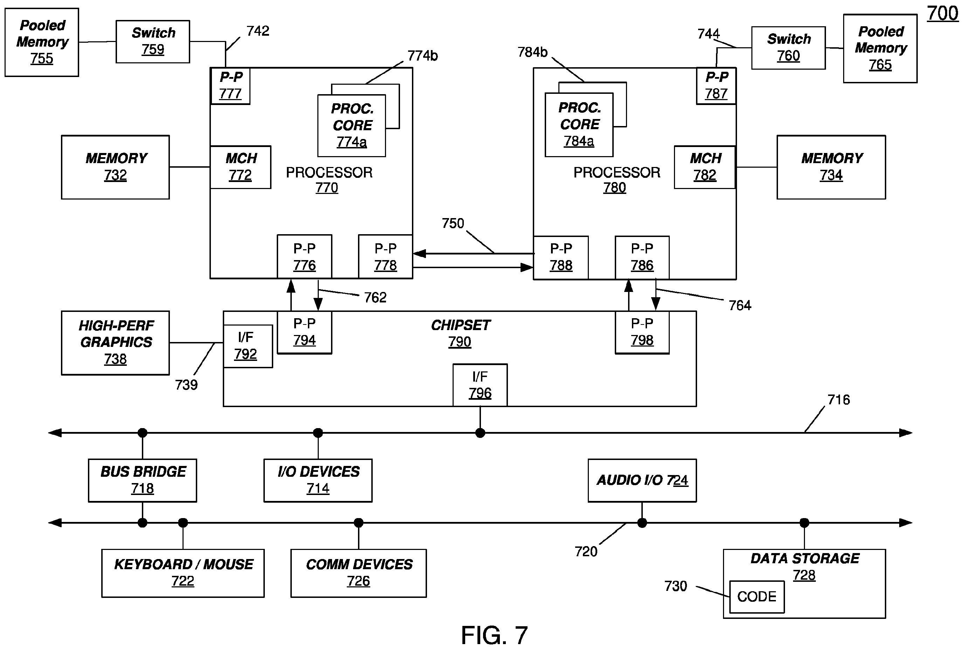

Referring now to FIG. 7, shown is a block diagram of a system in accordance with another embodiment of the present invention such as an edge platform. As shown in FIG. 7, multiprocessor system 700 includes a first processor 770 and a second processor 780 coupled via a point-to-point interconnect 750. As shown in FIG. 7, each of processors 770 and 780 may be many core processors including representative first and second processor cores (i.e., processor cores 774a and 774b and processor cores 784a and 784b).

In the embodiment of FIG. 7, processors 770 and 780 further include point-to point interconnects 777 and 787, which couple via interconnects 742 and 744 (which may be CXL buses) to switches 759 and 760, which may handle incoming PTP memory access requests by performing, if appropriate protocol conversion and directing the requests directly to a destination device (avoiding host processor latency), as described herein. In turn, switches 759, 760 couple to pooled memories 755 and 765.

Still referring to FIG. 7, first processor 770 further includes a memory controller hub (MCH) 772 and point-to-point (P-P) interfaces 776 and 778. Similarly, second processor 780 includes a MCH 782 and P-P interfaces 786 and 788. As shown in FIG. 7, MCH's 772 and 782 couple the processors to respective memories, namely a memory 732 and a memory 734, which may be portions of system memory (e.g., DRAM) locally attached to the respective processors. First processor 770 and second processor 780 may be coupled to a chipset 790 via P-P interconnects 776 and 786, respectively. As shown in FIG. 7, chipset 790 includes P-P interfaces 794 and 798.

Furthermore, chipset 790 includes an interface 792 to couple chipset 790 with a high performance graphics engine 738, by a P-P interconnect 739. As shown in FIG. 7, various input/output (I/O) devices 714 may be coupled to first bus 716, along with a bus bridge 718 which couples first bus 716 to a second bus 720. Various devices may be coupled to second bus 720 including, for example, a keyboard/mouse 722, communication devices 726 and a data storage unit 728 such as a disk drive or other mass storage device which may include code 730, in one embodiment. Further, an audio I/O 524 may be coupled to second bus 720.

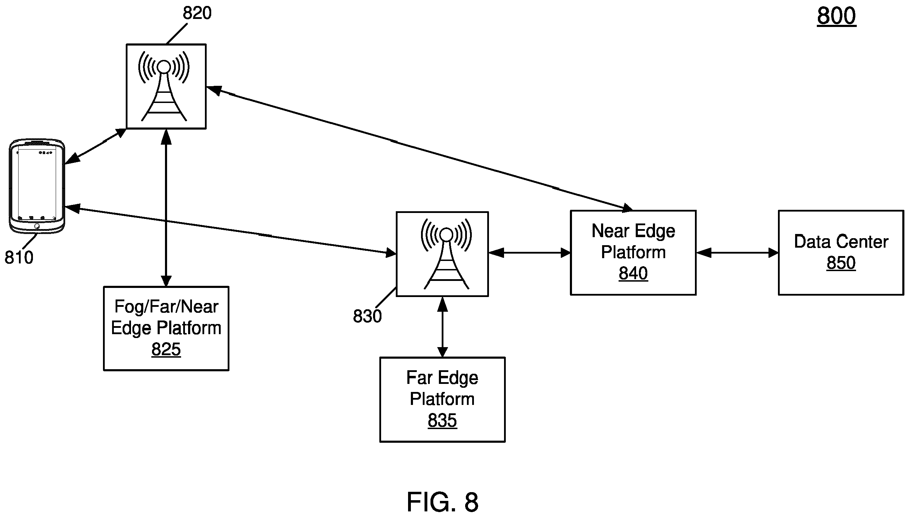

Embodiments as described herein can be used in a wide variety of network architectures. To this end, many different types of computing platforms in a networked architecture that couples between a given edge device and a datacenter can handle PTP memory accesses as described herein. Referring now to FIG. 8, shown is a block diagram of a network architecture in accordance with another embodiment of the present invention. As shown in FIG. 8, network architecture 800 includes various computing platforms that may be located in a very wide area, and which have different latencies in communicating with different devices.

In the high level view of FIG. 8, network architecture 800 includes a representative device 810, such as a smartphone. This device may communicate via different radio access networks (RANs), including a RAN 820 and a RAN 830. RAN 820 in turn may couple to a platform 825, which may be an edge platform such as a fog/far/near edge platform, and which may leverage embodiments herein. Other requests may be handled by a far edge platform 835 coupled to RAN 830, which also may leverage embodiments.

As further illustrated in FIG. 8, another near edge platform 840 may couple to RANs 820, 830. Note that this near edge platform may be located closer to a data center 850, which may have a large amount of computing resources. By pushing messages to these more remote platforms, greater latency is incurred in handling requests on behalf of edge device 810. Understand that some or all platforms shown in FIG. 8 may incorporate embodiments as described herein to handle PTP memory accesses with reduced latency.

The following examples pertain to further embodiments.

In one example, an apparatus includes: a first downstream port to couple to a first peer device; a second downstream port to couple to a second peer device; and a PTP circuit to receive a memory access request from the first peer device, the memory access request having a target associated with the second peer device, where the PTP circuit is to convert the memory access request from a coherent protocol to a memory protocol and send the converted memory access request to the second peer device.

In an example, the apparatus further comprises a system address decoder to determine that a target address of the memory access request is associated with the second peer device.

In an example, the PTP circuit is to convert the memory access request based at least in part on the determination that the target address of the memory access request is associated with the second peer device.

In an example, the PTP circuit is to determine whether the memory access request is cacheable.

In an example, in response to a determination that the memory access request is uncacheable, the PTP circuit is to convert the memory access request from the coherent protocol to the memory protocol.

In an example, in response to a determination that a second memory access request received from first peer device is cacheable, the apparatus is to send the second memory access request to a host processor coupled to the apparatus and not convert the second memory access request to the memory protocol.

In an example, the PTP circuit is to receive a response for the converted memory access request from the second peer device and send the response to the first peer device.

In an example, the PTP circuit is to convert the response from the memory protocol to the coherent protocol and send the converted response to the first peer device.

In an example, the coherent protocol comprises a CXL.cache protocol and the memory protocol comprises a CXL.memory protocol, the apparatus comprising a CXL switch.

In an example, the PTP circuit comprises a cacheability detector to determine whether the memory access request is cacheable.

In an example, the PTP circuit comprises a tag remapper to remap a source tag of the memory access request to a remapped source tag and send the converted memory access request having the remapped source tag to the second peer device.

In another example, a method comprises: receiving, in a switch coupled to a first peer device and a second peer device, a memory access request of a coherent protocol from the first peer device; and in response to determining that the memory access request is uncacheable, converting the memory access request to a converted memory access request of a memory protocol and sending the converted memory access request to the second peer device.

In an example, the method further comprises in response to determining that the memory access request is cacheable, sending the memory access request to a host processor coupled to the switch.

In an example, the method further comprises receiving, in the switch, a response from the second peer device and sending the response to the first peer device.

In an example, the method further comprises receiving the response of the memory protocol and converting the response to the coherent protocol and sending the converted response to the first peer device.

In an example, the method further comprises: receiving the memory access request comprising a write request to write artificial intelligence training data to the second peer device; and sending the artificial intelligence training data from the first peer device to the second peer device via the switch.

In another example, a computer readable medium including instructions is to perform the method of any of the above examples.

In a further example, a computer readable medium including data is to be used by at least one machine to fabricate at least one integrated circuit to perform the method of any one of the above examples.

In a still further example, an apparatus comprises means for performing the method of any one of the above examples.

In another example, a system comprises: a host processor; a first peer device; a second peer device; and a switch having a first port coupled to the host processor, a second port coupled to the first peer device, and a third port coupled to the second peer device. The switch may include: a PTP circuit to receive a first memory access request having a uncacheable attribute, the first memory access request directed from the first peer device to the second peer device, and convert the first memory access request from a coherent protocol to a memory protocol and send the converted first memory access request to the second peer device.

In an example, the switch is to receive a second memory access request having a cacheable attribute, the second memory access request directed from the first peer device to the second peer device, and send the second memory access request to the host processor.

In an example, the PTP circuit is to receive a response for the converted first memory access request from the second peer device and send the response to the first peer device.

In an example, the PTP circuit is to convert the response from the memory protocol to the coherent protocol and send the converted response to the first peer device, the coherent protocol comprising a CXL.cache protocol and the memory protocol comprising a CXL.memory protocol.

In another example, an apparatus comprises: means for receiving a memory access request of a coherent protocol from a first peer device; means for converting the memory access request to a converted memory access request of a memory protocol in response to determining that the memory access request is uncacheable; and means for sending the converted memory access request to a second peer device.

In an example, the apparatus further comprises means for sending the memory access request to a host processor in response to determining that the memory access request is cacheable.

In an example, the apparatus further comprises: means for receiving a response from the second peer device; and means for sending the response to the first peer device.

In an example, the apparatus further comprises means for converting the response to the coherent protocol.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. An apparatus comprising:
a first downstream port to couple to a first peer device;
a second downstream port to couple to a second peer device; and
a peer-to-peer (PTP) circuit to receive a memory access request from the first peer device, the memory access request having a target associated with the second peer device, wherein the PTP circuit is to convert the memory access request from a coherent protocol to a memory protocol and send the converted memory access request to the second peer device.

2. The apparatus of claim 1, further comprising a system address decoder to determine that a target address of the memory access request is associated with the second peer device.

3. The apparatus of claim 2, wherein the PTP circuit is to convert the memory access request based at least in part on the determination that the target address of the memory access request is associated with the second peer device.

4. The apparatus of claim 1, wherein the PTP circuit is to determine whether the memory access request is cacheable.

5. The apparatus of claim 4, wherein in response to a determination that the memory access request is uncacheable, the PTP circuit is to convert the memory access request from the coherent protocol to the memory protocol.

6. The apparatus of claim 1, wherein in response to a determination that a second memory access request received from the first peer device is cacheable, the apparatus is to send the second memory access request to a host processor coupled to the apparatus and not convert the second memory access request to the memory protocol.

7. The apparatus of any one of claims 1-6, wherein the PTP circuit is to receive a response for the converted memory access request from the second peer device and send the response to the first peer device.

8. The apparatus of claim 7, wherein the PTP circuit is to convert the response from the memory protocol to the coherent protocol and send the converted response to the first peer device.

9. A method comprising:
receiving, in a switch coupled to a first peer device and a second peer device, a memory access request of a coherent protocol from the first peer device; and
in response to determining that the memory access request is uncacheable, converting the memory access request to a converted memory access request of a memory protocol and sending the converted memory access request to the second peer device.

10. The method of claim 9, further comprising in response to determining that the memory access request is cacheable, sending the memory access request to a host processor coupled to the switch.

11. The method of claim 9, further comprising receiving, in the switch, a response from the second peer device and sending the response to the first peer device.

12. The method of claim 11, further comprising receiving the response of the memory protocol and converting the response to the coherent protocol and sending the converted response to the first peer device.

13. The method of claim 9, further comprising:
receiving the memory access request comprising a write request to write artificial intelligence training data to the second peer device; and
sending the artificial intelligence training data from the first peer device to the second peer device via the switch.

14. A computer-readable storage medium including computer-readable instructions, when executed, to implement a method as claimed in any one of claims 9 to 12.

15. An apparatus comprising means to perform a method as claimed in any one of claims 9 to 12.
